(19) Europäisches Patentamt
European Patent Office
Office européen des brevets

(11) Publication number: **0 176 292**
**A2**

# (12) EUROPEAN PATENT APPLICATION

(21) Application number: **85306526.6**

(22) Date of filing: **13.09.85**

(51) Int. Cl.[4]: **C 08 G 63/54**
C 08 G 69/44, C 08 G 69/26

(30) Priority: **28.09.84 GB 8424489**

(43) Date of publication of application:
**02.04.86 Bulletin 86/14**

(84) Designated Contracting States:
**DE FR GB NL**

(71) Applicant: **NATIONAL RESEARCH DEVELOPMENT CORPORATION**
**101 Newington Causeway**
**London SE1 6BU(GB)**

(72) Inventor: **Jenkins, Aubrey Dennis**
**32 Silverdale Road**
**Burgess Hill Sussex RH15 OEP(GB)**

(72) Inventor: **Al-Dujaili, Amar Hani**
**University of Baghdad College of Education**
**Adymia-Baghdad(IQ)**

(72) Inventor: **Walton, David Ralph Miles**
**10 Lockitt Way Kingston**
**Lewes Sussex BN7 3LG(GB)**

(74) Representative: **Colmer, Stephen Gary**
**Patent Department National Research Development**
**Corporation 101 Newington Causeway**
**London SE1 6BU(GB)**

## (54) Aromatic polymers.

(57) A thermoplastic polyester, polyamide or poly(esteramide) which comprises at least one mesogenic unit of the formula:

$$-Ar_1-CR_1=R_2=R_3C-Ar_2-$$

wherein:

$Ar_1$ and $Ar_2$, which may be the same or different, each represent a divalent aromatic residue conjugated with the other;

$R_1$ and $R_3$, which may the same or different, each represent a hydrogen atom or a monovalent substituent group; and

$R_2$ represents (i) a *bis*-multiply-bonded group of the formula:

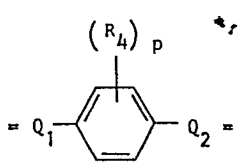

in which:

$R_4$ represents a monovalent substituent group; and

$Q_1$ and $Q_2$, which may the same or different, each represent a nitrogen atom or a $CR_5$ group wherein $R_5$ represents a hydrogen atom or a monovalent substituent group; and

p represents zero or a number not greater than 4;

or $R_2$ represents (ii), together with $R_1$ and $R_3$, a triple bond.

EP 0 176 292 A2

# AROMATIC POLYMERS

This invention relates to aromatic polymers; more particularly, this invention relates to thermoplastic, preferably melt-processable, aromatic polyesters, polyamides and poly(ester-amides) comprising mesogenic units; to processes for their preparation; and to their fabrication, for example into filaments, films or mouldings.

A large number of organic materials, many of them polymeric in nature, are now known in which some structural order is maintained in proceeding from the solid phase to the melt or solution. These materials are said to exhibit liquid crystalline behaviour, that occurring in the melt being termed thermotropic while that occurring in solution being termed lyotropic. Different kinds of liquid crystalline order have been characterised, including the nematic, smectic, cholesteric, discotic and homeotropic types. Nematic melts or solutions are less ordered than smectic melts or solutions but can posssess relatively low viscosities. This is a technologically very important property because it enables polymeric such materials to be comparatively readily processed, especially (in the case of thermotropic nematic liquid crystalline polymers) melt-processed, to fabricated materials in which at least the high degree of nematic order is retained thereby providing anisotropic solid polymeric materials with attendant advantages, especially in relation to bulk mechanical properties such as tensile strength and modulus. The early appreciation of the importance of this property in the art had led to the production and characterisation of liquid crystalline polymers with increasingly rigid backbones (examples of classes of such materials being wholly aromatic thermotropic polyester, thermotropic polyazomethines and "linkageless" lyotropic polyheterocyclics) which impart increasingly higher bulk mechanical properties.

Such polymeric materials, however, suffer from two major processing disadvantages: their tendency to crystalline order is often so high that not only do they exhibit transition points from the solid to the liquid crystalline state at impracticably high

temperatures (with concomitant onset of thermal decomposition) but also they have poor solubility in common solvents.

This invention seeks to provide liquid crystalline polymers in which the aforementioned disadvantages are reduced.

According, therefore, to one aspect of this invention there is provided a thermoplastic, preferably melt-processable, homo- or co-polyester, polyamide or poly(ester-amide) which comprises at least one, and preferably a plurality of, mesogenic unit(s) of the formula:

$$-Ar_1-CR_1=R_2=R_3C-Ar_2-$$

wherein:

$Ar_1$ and $Ar_2$, which may be the same or different, each represent a divalent aromatic residue conjugated with the other;

$R_1$ and $R_3$, which may the same or different, each represent a hydrogen atom or a monovalent substituent group; and

$R_2$ represents (i) a <u>bis</u>-multiply-bonded group of the formula:

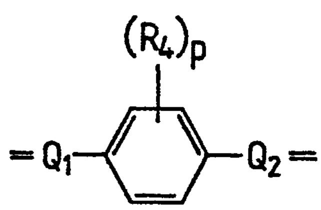

in which:

$R_4$ represents a monovalent substituent group; and

$Q_1$ and $Q_2$, which may the same or different, each represent a nitrogen atom or a $CR_5$ group wherein $R_5$ represents a hydrogen atom or a monovalent substituent group; and

p represents zero or a number not greater than 4;

or $R_2$ represents (ii), together with $R_1$ and $R_3$, a triple bond.

It is a particularly preferred feature of this invention that the or each mesogenic unit is incorporated into the backbone of

the polymer. Preferably, at least one, and desirably both, of the two aromatic residues is a carbocyclic aromatic residue. It is also preferred that at least one, and desirably both, of the two aromatic residues is a monocyclic aromatic residue.

In accordance with a particularly preferred embodiment of this invention, the or each mesogenic unit has the formula:

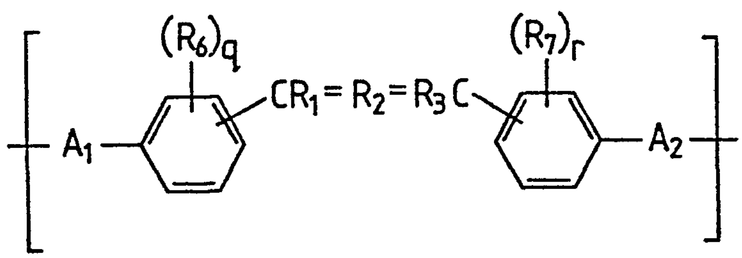

wherein:

$A_1$ and $A_2$, which may be the same or different, each represent an oxygen atom or a group of the formula -CO- or -NH-;

$R_6$ and $R_7$, which may be the same or different, each represent a monovalent substituent group;

$R_1$ $R_2$ and $R_3$ are as herein defined; and

q and r, which may be the same or different, each represent zero or a number not greater than 4.

It is particularly preferred that the residue:

$$-CR_1=R_2=R_3C-$$

is bonded <u>para</u>- to at least one of $A_1$ and $A_2$ and preferably to both of $A_1$ and $A_2$.

It is desirable, in accordance with a preferred feature of this invention, that at least one of $A_1$ and $A_2$ represents an oxygen atom.

It is particularly preferred that the residue $-CR_1=R_2=R_3C-$ is an acetylenic group.

$R_6$, $R_7$ and (where present) $R_4$ may comprise one or more monovalent substituents; for example a (+R, -I) group such as a halo (-F, -Cl, -Br, -I), hydroxyl, ether, ester, mercaptan, thioether, substituted or unsubstituted amine, or urethane group; a (-R, -I) group such as a nitro, cyano, aldehyde, keto, carboxylic acid, ester or amide, sulphone or trifluoromethyl group; a (+R, +I) group such as an oxide, sulphide or alkyl group. Not all of the q $R_6$ nor the r $R_7$ nor the p $R_4$ need be the same. It is, however, preferred for reasons of accessibility of reactant and, consequently, of economy that at least one, and preferably all, of p, q and r represents zero.

The thermoplastic polymer of this invention is preferably a polyester.

The mesogenic unit may be incorporated in the acid moiety or the glycollic or poly-phenolic moiety (or, indeed, both) of the polyester. It is preferred, however, that it is contained in the latter moiety.

Suitably, the acid moiety of the polyester is a polycarboxylic, desirably a dicarboxylic, acid moiety. The acid moiety of the polyester is suitably an aliphatic or cycloaliphatic moiety, desirably a saturated such moiety. It is preferred that the acid moiety of the polyester is a substituted or unsubstituted (preferably unsubstituted for reasons of accessibility of reactants) aliphatic or cycloaliphatic, saturated dicarboxylic acid moiety, especially an α, ω-such moiety of the formula:

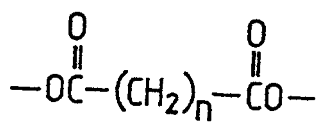

wherein n is in integer greater than 1; for example, from 3 to 11. Examples include succinic, glutaric, adipic, pimelic, suberic, azelaic and sebacic acid moieties. All of these moieties

can yield polyesters of the invention with a $T_m$ below 300°C, usually below 250°, without undergoing thermal decomposition, which are desirable processing attributes. More than one such acid moiety may be present in a given copolyester. Particularly preferred such polyesters are those comprising residues of the formula:

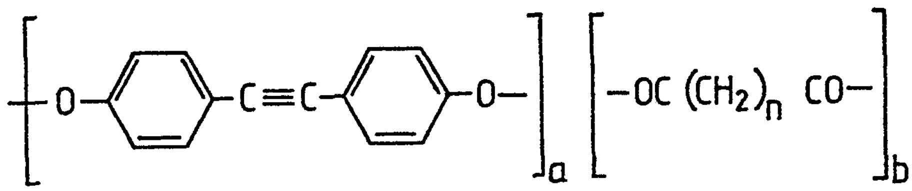

wherein:

a and b are the molar factions of the respective residues and $a + b \leq 1$; and

n is a number from 2 to 12, with the proviso that n need not be the same for all dicarboxylate residues present.

According to a further aspect of this invention, there is provided a process for the preparation of a thermoplastic polyester, polyamide or poly(ester-amide) which comprises at least one mesogenic unit of the formula:

$$-Ar_1-CR_1=R_2=R_3C-Ar_2-$$

wherein:

$Ar_1$, $Ar_2$, $R_1$, $R_2$ and $R_3$, are as herein defined, which process comprises reacting a compound of the formula:

$$X_1Ar_1-CR_1=R_2=R_3C-Ar_2X_2$$

wherein:

$X_1$ and $X_2$, which may be the same or different, each represent either (i) an acyl halide, for example chloride, ester or amide

group or (ii) a hydroxyl or substituted or unsubstituted amino group with either, in the case of (i), a compound comprising two functional groups, which may be the same or different, selected from hydroxyl and substituted or unsubstituted amino groups or, in the case of (ii), a compound comprising two functional groups, which may be the same or different, selected from acyl halide, for example chloride, ester or amide.

In the case where $R_2$ represents a bis-multiply bonded group of the formula:

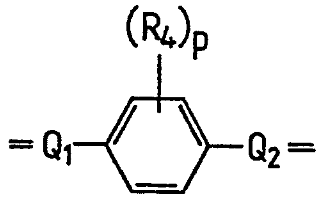

wherein:

$Q_1$ and $Q_2$, which may be the same or different, each represent a $CR_5$ group; and

$R_4$, $R_5$ and p are as herein defined the compound of the formula:

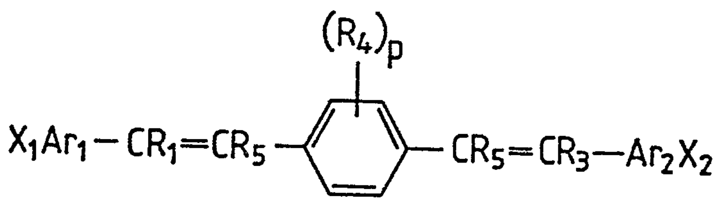

wherein:

$X_1$ and $X_2$, which may be the same or different, each represent a hydroxyl or substituted or unsubstituted amino group; and

$Ar_1$, $Ar_2$, $R_1$, $R_3$, $R_4$, $R_5$ and p are herein defined may be prepared in accordance with the Wittig reaction. For example, the compound may be prepared by first reacting a compound of the formula:

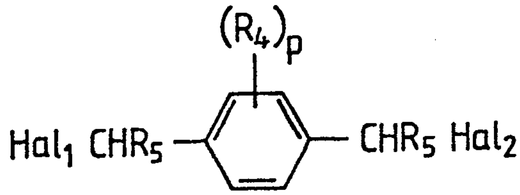

wherein

$Hal_1$ and $Hal_2$, which may be the same or different, each represent a halogen atom, suitably a chlorine atom, for example as in 1,4-dichloromethylbenzene or 1,4-dichloromethyl-2,5-dimethylbenzene, with a trihydrocarbylphosphine such as a triarylphosphine, for example triphenylphosphine, in a polar solvent, for example dimethylformamide, to form the corresponding bis-phosphonium halide; treating the halide with a strong base, for example lithium ethoxide in ethanol; and reacting the bis-phosphorane, either simultaneously or subsequently, with the or each monoaldehydic or ketonic compound of the formula:

$$X_1Ar_1 - CR_1{=}O \text{ and/or } X_2Ar_2 - CR_3{=}O$$

in which:

$X_1$, $X_2$, $Ar_1$, $Ar_2$, $R_1$ and $R_3$ are as herein defined.

It may be desirable to protect the or each group $X_1$ and $X_2$, in a manner known per se, during the Wittig reaction. For example, when $X_1$ and $X_2$ are hydroxyl groups these may be protected by preliminary reaction with 2-chlorotetrahydrofuran, in the presence of base, in tetrahydrofuran. The phenolic hydroxyl group may thereafter be regenerated by hydrolysing with acetic acid.

In the case where $Q_1$ and $Q_2$, which may be the same or different, each represent a $CR_5$ group but $X_1$ and $X_2$, which may the same or different, represent a aryl halide, ester or amide group, the Wittig reaction is effected by reacting a mono-phosphonium salt with a bis-aldehydic or ketonic compound. For example, the compound may be prepared by first reacting a compound of the formula:

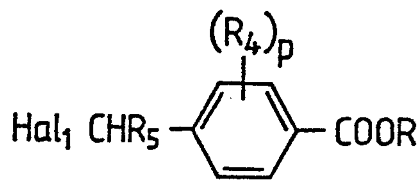

wherein:

R represents a lower alkyl group; and

$Hal_1$, $R_4$, $R_5$ and p are as herein defined with the compound:

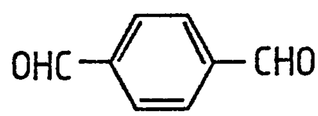

as aforesaid and then, if desired, forming in a manner known per se, the corresponding acyl chloride or amide.

In the case where $R_2$ represents a bis-multiply bonded group of the formula:

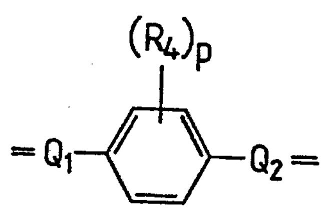

wherein:

$Q_1$ and $Q_2$ each represent a nitrogen atom; and

$R_4$ and p are as herein defined the thermoplastic polymer of the invention is desirably prepared by first forming an α, ω-dialdehyde of the formula:

$$OHC-Ar_2-A_2B-A_1-Ar_1-CHO$$

wherein:

B is a polyester, polyamide or poly(ester-amide) forming moiety; and

$A_1$, $A_2$, $Ar_1$, $Ar_2$ are as herein defined and reacting this with a diamine of the formula:

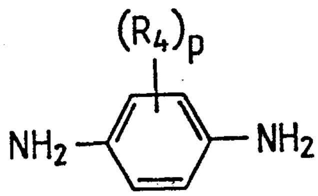

wherein:

$R_4$ and p as herein defined to form the required poly-Schiff's base. For example, the α, ω-dialdehydic compound wherein $A_1$ and $A_2$ represent oxygen atoms and B represents a residue of the formula:

$$-OC(CH_2)_nCO-$$

wherein n is a number from 2 to 12 may be prepared by reacting the compound of the formula:

$$HO-Ar_1-CHO \text{ and/or } HO-Ar_2-CHO$$

with the diacyl halide, for example of the diacyl chloride, of the formula:

$$Hal\ OC(CH_2)_nCO\ Hal$$

In the case where $R_1$, $R_2$ and $R_3$ together form a triple bond, the thermoplastic polymer of the invention is desirably prepared as shown or by analogy with, the following Examples.

The following Examples illustrate the invention.

EXAMPLE 1

(The first part of this Example illustrates the preparation of an acetylenic mesogen, 4,4'-dihydroxytolan; the latter part illustrates the preparation of a thermotropic liquid crystal polymer therefrom.)

44 g of anisoin (0.16 mole), 80 g of copper sulphate (1.13 moles), 80 ml water and 240 ml pyridine were mixed in a 2-litre round-bottomed flask and heated over a steam bath, with stirring, for 4 hours. 42 g of a pale yellow crystalline product were obtained and washed with water. The product, anisil, was found to have a melting point of 131-132$^{o}$C and $^{1}$H NMR peaks as follows: -Ph, δ = 7.48 ppm m; $-CH_3$, δ = 3.85 ppm s ($CDCl_3$/TMS).

50 g of anisil (0.19 mole) and 180 ml of n-propanol were then mixed in a 1-litre flask fitted with an efficient condenser. 25 g of 100% hydrazine hydrate (0.5 mole) were next added and the mixture was heated, under reflux, for 60 hours. After cooling in an ice-bath a white powder, crude anisil dihydrazone, was obtained, removed by filtration and washed with cold absolute ethanol. The dihydrazone was produced in a yield of 90% and was found to have a melting point of 118$^{o}$C and $^{1}$H NMR peaks as follows: -Ph, δ = 7.28 ppm m; $-NH_2$, δ = 5.65 ppm s; $-CH_3$, δ = 3.75 s ($CDCl_3$/TMS).

40 g of anisil dihydrazone (0.13 mole) were added to 250 ml of benzene in a 1-litre 3-necked round-bottomed flask fitted with a condenser and a stirrer. 2.4 g of yellow mercuric oxide were then added (while stirring in order to keep the dihydrazone in suspension) and the mixture was gently warmed over a steam bath. As nitrogen evolved the mixture turned grey. Additional yellow mercuric oxide was introduced, in small portions, so as to maintain the mixture at gentle reflux; a total of 85 g was added (0.39 mole). The mixture was next stirred for 1 hour, allowed to stand overnight, and filtered to remove Hg and HgO

residues. Benzene washings (100 ml) of the residue were combined with the filtered liquor which was then dried over anhydrous sodium sulphate before the benzene was removed by distillation under reduced pressure while heating on a water bath. The product, 4,4'-dimethoxytolan, was produced in a yield of 62% (25 g) and was found to have a melting point of 144-146$^{o}$C and $^{1}$H MNR peaks as follows: -Ph, δ = 7.25 ppm m; $-OCH_3$, δ = 3.8 ppm s ($CDCl_3$/TMS).

A Grignard reagent was prepared from 7 g of magnesium turnings (0.3 atom) and 45 g of methyl iodide (0.3 mole) in 140 ml of diethyl ether in a 1-litre flask. 25 g of 4,4'-dimethoxytolan (0.1 mole) were then added and the ether was removed by distillation under reduced pressure, after which the residue was heated for 15 minutes at 6-8 mm Hg at 100$^{o}$C. 147 g of molten naphthalene (1.15 mole) were next added and the mixture was stirrred, under nitrogen, for 4 hours at 196$^{o}$C. Gas vigorously evolved from the mixture during the early stages of heating after which the mixture thickened noticeably. The mixture was cooled to 90$^{o}$C; 140 ml of dry benzene were added; and, after 15 minutes at 95$^{o}$C, the mixture was filtered hot. The insoluble residue was then heated for a further 15 minutes with 120 ml more dry benzene and was again filtered hot. Finally, the residue was washed with 50 ml more hot, dry benzene. The organomagnesium compound was next suspended in 80 ml of diethyl ether and hydrolysed by adding 90 ml ice-water, 120 ml saturated aqueous ammonium chloride and 60 ml of 40% acetic acid. After separating the ethereal layer, the aqueous layer was extracted successively with two 100 ml portions of diethyl ether; and the combined ether extracts were dried over anhydrous sodium sulphate and then reduced to a solid residue in a rotary evaporator. The residue was then dissolved in 250 ml of boiling diethyl ether, decolourised with activated charcoal and mixed with 650 ml of petroleum ether (60-80$^{o}$ boiling fraction). The crude product, 4,4'-dihydroxytolan, was finally recrystallised from 280 ml of 40% aqueous ethanol in a yield of 35% (8 g) and was found to have a melting point of 200-205$^{o}$C (with decomposition) and 'H NMR peaks as follows: -Ph, δ = 7.08 ppm m; -OH, δ = 9.9 ppm s ($d^{6}$ acetone/TMS). Further

analyses were effected to characterise the product; thus, in microanalysis the following percentages were found by weight: C 79.8; H 5.1 (theoretical: C 80.0; H 4.8). In mass spectroscopy a parent ion of 210 mμ was given while IR spectroscopy gave absorptions at 3380 $cm^{-1}$ and 2320 $cm^{-1}$ assignable, respectively, to-OH and -C≡C-.

Acyl chlorides of the saturated dicarboxylic acids $HOOC-(CH_2)_n-COOH$ wherein n represents 4, 5, 6, 7, 8, 10 and 12 were prepared by refluxing the respective acid with excess thionyl chloride and removing surplus reagent by vacuum distillation. The acyl chlorides so formed were subject to vacuum distillation before use.

All dihydroxytolan polyesters hereinafter characterised were prepared by the following method, illustrated here by reference to sebacic acid. 0.8 g of sodium hydroxide (20 mmole) was dissolved in 100 ml water and mixed with 2.1 g of 4,4'-dihydroxytolan (10 mmole) and 1 g benzyltriethyl ammonium chloride. The mixture was then transferred to a Waring blender and slowly stirred while a solution of 2.39 g sebacoyl chloride (10 mmole) in 80 ml chloroform was rapidly added to form a viscous slurry. The slurry was stirred at maximum speed for 10 minutes whereafter the resulting emulsion was poured into 30 ml acetone. The precipitated polymer was next filtered; washed successively with acetone, water and methanol; and dried at 70°C in vacuo. The polymer so obtained was a white powdery solid. This was finally Soxhlet-extracted for 6 hours with methanol and allowed to dry at 70°C in vacuo.

The polymers were then characterised by determination of inherent viscosities and transition points, as shown in the Table below. Inherent viscosities were determined at 30°C using a solution of 0.1 to 0.5 g polymer in 100 ml of a 60/40 volume mixture of phenol and tetrachlorethane. A viscomatic MS-type 5300 Fica viscometer was used. Thermal analyses were performed using a Perkin-Elmer DSC-2 differential scanning calorimeter. A constant flow of nitrogen was maintained through the sample compartment and the usual rate of heating was 20°C $min^{-1}$. Indium of 99.99% purity was used for calibration.

TABLE

| POLYMER | [η] dl gl$^{-1}$ | TRANSITION TEMPERATURES | | | | LIQUID CRYSTALLINE BEHAVIOUR |
|---|---|---|---|---|---|---|
| | | HEATING | | COOLING | | |
| | | Tm°C | Ti°C | Tm°C | Ti°C | |
| T4[1] | 0.26 | 263 | a[2] | 257 | a | nematic |
| T5 | 0.31 | 239 | a | 216 | a | nematic |
| T6 | 0.32 | 257 | 362(b)[3] | 251 | a | nematic |
| T7 | 0.27 | 235 | a | 219 | a | nematic |
| T8 | 0.20 | 249 | 350 | 233 | 341 | nematic |
| T10 | 0.37 | 150 | 201 | 131 | 173 | nematic |
| T12 | 0.13 | 146 | 187 | 135 | 167 | smectic |

[1]This notation signifies that the polymer is a polyester of the glycol, 4,4-dihydroxytolan (T), with the aforementioned saturated dicarboxylic acid (N).

[2]This signifies that the transition temperature is obscured by decomposition.

[3]This signifies that decomposition could be observed at the transition temperature.

This invention also provides a liquid crystalline polymer which comprises at least one mesogenic unit of the formula:

$$-Ar_1-C\equiv C-Ar_2-$$

wherein:

$Ar_2$ and $Ar_2$, which may be the same or different, are as herein defined.

This invention further provides a thermoplastic polyester which comprises at least one acetylenic mesogenic unit, especially wherein the acetylenic mesogenic unit is as herein defined.

CLAIMS

1. A thermoplastic polyester, polyamide or poly(ester-amide) which comprises at least one mesogenic unit of the formula:

$$-Ar_1-CR_1=R_2=R_3C-Ar_2-$$

wherein:

$Ar_1$ and $Ar_2$, which may be the same or different, each represent a divalent aromatic residue conjugated with the other;

$R_1$ and $R_3$, which may the same or different, each represent a hydrogen atom or a monovalent substituent group; and

$R_2$ represents (i) a bis-multiply-bonded group of the formula:

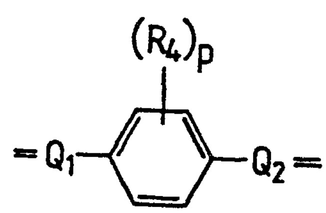

in which:

$R_4$ represents a monovalent substituent group; and

$Q_1$ and $Q_2$, which may the same or different, each represent a nitrogen atom or a $CR_5$ group wherein $R_5$ represents a hydrogen atom or a monovalent substituent group; and

p represents zero or a number not greater than 4;

or $R_2$ represents (ii), together with $R_1$ and $R_3$, a triple bond.

2. A thermoplastic polyester, polyamide or poly(ester-amide) according to Claim 1 wherein the or each mesogenic unit is incorporated into the backbone of the polymer.

3. A thermoplastic polyester, polyamide or poly(ester-amide) according to Claim 1 or Claim 2 wherein at least one of the two aromatic residues is a carboxylic aromatic residue.

4. A thermoplastic polyester, polyamide or poly(ester-amide) according to any preceding claim wherein at least one of the two aromatic residues is a monocyclic aromatic residue.

5. A thermoplastic polyester, polyamide or poly(ester-amide) according to any preceding claim wherein the or each mesogenic unit has the formula:

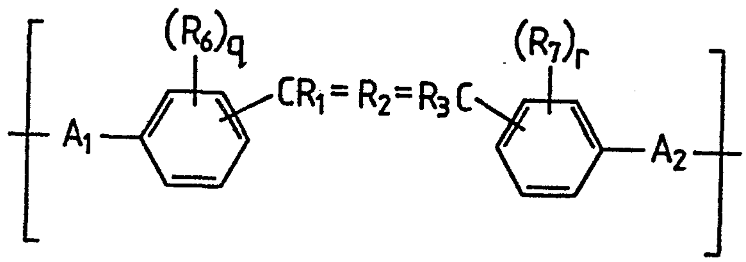

wherein:

$A_1$ and $A_2$, which may be the same or different, each represent an oxygen atom or a group of the formula -CO- or -NH-;

$R_6$ and $R_7$, which may be the same or different, each represent a monovalent substituent group;

$R_1$ $R_2$ and $R_3$ are as herein defined; and

q and r, which may be the same or different, each represent zero or a number not greater than 4.

6. A thermoplastic polyester, polyamide or poly(ester-amide) according to Claim 5 wherein the residue $-CR_1=R_2=R_3C-$ is bonded <u>para</u>- to at least one of $A_1$ and $A_2$.

7. A thermoplastic polyester, polyamide or poly(ester-amide) according to Claim 5 or Claim 6 wherein at least one of $A_1$ and $A_2$ represents an oxygen atom.

8. A thermoplastic polyester, polyamide or poly(ester-amide) according to Claims 5, 6 or 7 wherein the residue $-CR_1=R_2=R_3C-$ is an acetylenic group.

9. A thermoplastic polyester, polyamide or poly(ester-amide) according to any of Claims 5, to 8 wherein at least one of p, q and r is zero.

10. A thermoplastic polymer according to any preceding claim which is a polyester.

11. A polyester according to any preceding claim where the acid moiety of the polyester is polycarboxylic acid moiety.

12. A polyester according to any preceding claim where the acid moiety of the polyester is an aliphatic or cycloaliphatic moiety.

13. A polyester according to Claim 11 or 12 wherein the acid moiety of the polyester is a substituted or unsubstituted, aliphatic or cycloaliphatic, saturated dicarboxylic acid moiety.

14. A polyester comprising residues of the formula:

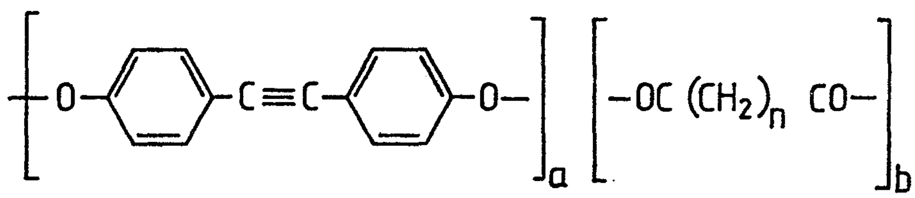

wherein:

a and b are the molar factions of the respective residues and $a + b \leq 1$; and

n is a number from 2 to 12, with the proviso that n need not be the same for all dicarboxylate residues present.

15. A liquid crystalline polymer which comprises at least one mesogenic unit of the formula:

$$-Ar_1-C\equiv C-Ar_2-$$

wherein:

$Ar_2$ and $Ar_2$, which may be the same or different, are as herein defined.

16. A thermoplastic polyester which comprises at least one acetylenic mesogenic unit.

17. A thermoplastic polyester according to Claim 16 wherein the acetylenic mesogenic unit has the formula defined in Claim 15.

18. A liquid crystalline polymer according to Claims 15 to 17 where the mesogenic unit has the formula defined in Claim 5.